(19) Europäisches Patentamt European Patent Office Office européen des brevets

(11) **EP 4 686 961 A1**

(12) **EUROPEAN PATENT APPLICATION**

(43) Date of publication:
**04.02.2026 Bulletin 2026/06**

(21) Application number: **25193506.0**

(22) Date of filing: **01.08.2025**

(51) International Patent Classification (IPC):
**G01V 1/36** (2006.01) **G01V 1/30** (2006.01)
**G01V 1/32** (2006.01)

(52) Cooperative Patent Classification (CPC):
**G01V 1/36; G01V 1/306; G01V 1/307; G01V 1/325;**
G01V 2210/56; G01V 2210/675

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.08.2024 US 202463678096 P**

(71) Applicants:
• **Services Pétroliers Schlumberger**
**75007 Paris (FR)**
Designated Contracting States:
**FR**
• **GeoQuest Systems B.V.**
**2514 JG The Hague (NL)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **KUMAR, Rajiv**
**Crawley, RH6 0NZ (GB)**
• **LAU, Ying Ting**
**Crawley, RH10 9BU (GB)**
• **MANIKANI, Sunil**
**411006 Pune (IN)**
• **VASSALLO, Massimiliano**
**Crawley, RH6 0NZ (GB)**
• **BOIERO, Daniele**
**Houston, 77077 (US)**
• **BAGAINI, Claudio**
**Crawley, RH6 0NZ (GB)**

(74) Representative: **Schlumberger Intellectual Property Department**
**Parkstraat 83**
**2514 JG Den Haag (NL)**

(54) **EXTRAPOLATING GREEN'S FUNCTION ESTIMATED USING MULTIDIMENSIONAL DECONVOLUTION BEYOND RECEIVER GRID THROUGH DEEP LEARNING**

(57) A method for transforming seismic images includes receiving input data. The input data includes an original upward-downward diffusion (UDD) seismic image and an original multi-dimensional deconvolution (MDD) seismic image. The method also includes training a generator and a discriminator based upon the input data to produce a trained generator and a trained discriminator.

**EP 4 686 961 A1**

## EP 4 686 961 A1

## Description

### Cross-Reference to Related Applications

This application claims priority to U.S. Provisional Patent Application No. 63/678,096, filed on August 1, 2024, which is incorporated by reference.

### Background

Data-dependent re-datuming techniques to estimate Green's function (e.g., subsurface reflectivity) allow the effect of a water column to be removed from ocean-bottom node data, where the integral equation is either solved using up-down deconvolution or multi-dimensional deconvolution. While the up-down deconvolution (UDD) produces an optimal Green's function for a flat seabed and a mild subsurface structure, the presence of seabed tilt with sharp lateral variations (i.e., faults) makes UDD unstable. Therefore, what is needed is an improved system and method for extrapolating Green's function estimated using multi-dimensional deconvolution (MDD).

### Summary

A method for transforming seismic images is disclosed. The method includes receiving input data. The input data includes an original upward-downward diffusion (UDD) seismic image and an original multi-dimensional deconvolution (MDD) seismic image. The method also includes training a generator and a discriminator based upon the input data to produce a trained generator and a trained discriminator.

A computing system is also disclosed. The computing system includes one or more processors and a memory system. The memory system includes one or more non-transitory computer-readable media storing instructions that, when executed by at least one of the one or more processors, cause the computing system to perform operations. The operations include receiving input data. The input data includes an original upward-downward diffusion (UDD) seismic image and an original multi-dimensional deconvolution (MDD) seismic image. The operations also include iteratively training a generator and a discriminator based upon the input data to produce a trained generator and a trained discriminator. Iteratively training includes (1) training the generator to transform the original UDD seismic image to the original MDD seismic image, which includes generating a fake MDD seismic image based upon the original UDD seismic image; (2) training the discriminator to distinguish the original MDD seismic image from the fake MDD seismic image; (3) training the generator to transform the original MDD seismic image to the original UDD seismic image, which includes generating a fake UDD seismic image based upon the original MDD seismic image; and (4) training the discriminator to distinguish the real UDD seismic image from the fake UDD seismic image. The operations also include receiving new input data. The new input data includes a new original UDD seismic image and/or a new original MDD seismic image. The operations also include transforming the new original UDD seismic image into a first transformed seismic image using the trained generator. The first transformed seismic image is the same as the new original MDD seismic image. The operations also or instead include transforming the new MDD seismic image into a second transformed seismic image using the trained generator. The second transformed seismic image is the same as the new original UDD seismic image.

A non-transitory computer-readable medium is also disclosed. The medium stores instructions that, when executed by one or more processors of a computing system, cause the computing system to perform operations. The operations include receiving input data. The input data includes original upward-downward diffusion (UDD) seismic image and an original multi-dimensional deconvolution (MDD) seismic image. The operations also include normalizing the input data to produce normalized input data. Normalizing the input data modifies amplitudes of the original UDD seismic image and the original MDD seismic image to be in a range from -1 to +1. The operations also include iteratively training a generator and a discriminator based upon the normalized input data to produce a trained generator and a trained discriminator. Iteratively training includes training the generator to transform the original UDD seismic image to the original MDD seismic image. Training the generator includes generating a fake MDD seismic image based upon the original UDD seismic image. Training the generator also includes determining an adversarial loss that occurs in response to generating the fake MDD seismic image. The adversarial loss is determined using the discriminator. Training the generator also includes generating a reconstructed UDD seismic image using the generator based upon the fake MDD seismic image. Training the generator also includes determining a difference between the original UDD seismic image and the reconstructed UDD seismic image, which represents a forward cycle consistency loss. Training the generator also includes adjusting weights of the generator based upon the adversarial loss and the forward cycle consistency loss, which causes a new original MDD seismic image to be more difficult for the discriminator to distinguish from a new fake MDD seismic image that is generated by the generator. Iteratively training also includes training the discriminator to distinguish the original MDD seismic image from the fake MDD seismic image. Training the discriminator includes determining a first loss to classify the original MDD seismic image as real. Training the discriminator also includes determining a second loss to classify the fake MDD seismic image as fake. Training the discriminator also includes adjusting weights of the discriminator based upon the first and second losses to more accurately distinguish the new original MDD seismic image from the new fake MDD seismic image. Iteratively training also includes training the generator to transform the original MDD seismic image to the original UDD seismic image. Training the generator includes generating a fake UDD seismic image based upon the original MDD seismic image. Training the generator also includes determining an adversarial loss that occurs in response to generating the fake UDD seismic image. The adversarial loss is determined using the discriminator. Training the generator also includes adjusting weights of the generator based upon the adversarial loss, which causes a new original UDD seismic image to be more difficult for the discriminator to distinguish from a new fake UDD seismic image that is generated by the generator. Iteratively training also includes training the discriminator to distinguish the real UDD seismic image from the fake UDD seismic image. Training the discriminator includes determining a third loss to classify the original UDD seismic image as real. Training the discriminator also includes determining a fourth loss to classify the fake UDD seismic image as fake. Training the discriminator also includes adjusting weights of the discriminator based upon the third and fourth losses to more accurately distinguish the new original UDD seismic image from the new fake UDD seismic image. The operations also include receiving new input data. The new input data includes the new UDD seismic image and/or the new MDD seismic image. Training the discriminator also includes transforming the new UDD seismic image into a first transformed seismic image using the trained generator. The first transformed seismic image is the same as the new MDD seismic image. Training the discriminator also includes transforming the new MDD seismic image into a second transformed seismic image using the trained generator. The second transformed seismic image is the same as the new UDD seismic image.

It will be appreciated that this summary is intended merely to introduce some aspects of the present methods, systems, and media, which are more fully described and/or claimed below. Accordingly, this summary is not intended to be limiting.

**Brief Description of the Drawings**

The accompanying drawings, which are incorporated in and constitute a part of this specification, illustrate embodiments of the present teachings and together with the description, serve to explain the principles of the present teachings. In the figures:

**Figure 1** illustrates an example computing system, according to an embodiment.
**Figure 2** illustrates a survey operation being performed by a survey tool, such as a seismic truck, to measure properties of the subterranean formation, according to an embodiment.
**Figure 3** illustrates a drilling operation being performed by drilling tools suspended by a rig and advanced into subterranean formations to form a wellbore, according to an embodiment.
**Figure 4** illustrates a wireline operation being performed by a wireline tool suspended by the rig and into the wellbore, according to an embodiment.
**Figure 5** illustrates a production operation being performed by a production tool deployed from a production unit or Christmas tree and into the completed wellbore for drawing fluid from the downhole reservoirs into the surface facilities, according to an embodiment.
**Figure 6** illustrates a schematic view, partially in cross-section of an oilfield having data acquisition tools and positioned at various locations along an oilfield for collecting data of a subterranean formation, according to an embodiment.
**Figure 7** illustrates an oilfield for performing production operation, according to an embodiment.
**Figure 8** illustrates an acquisition setup of an ocean bottom node scenario, according to an embodiment.
**Figure 9** illustrates a generative adversarial network (GAN) based deep learning workflow to obtain MDD from UDD, according to an embodiment.
**Figure 10** illustrates a workflow for training and predicting a ML-generated synthetic MDD equivalent of corresponding UDD patch or gathers, according to an embodiment.
**Figure** 11 illustrates a flowchart of a method for transforming seismic images, according to an embodiment.

**Detailed Description**

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits and networks have not been described in detail so as not to unnecessarily obscure aspects of the embodiments.

It will also be understood that, although the terms first, second, etc., may be used herein to describe various elements, these elements should not be limited by these terms. These terms are used to distinguish one element from another. For example, a first object or step could be termed a second object or step, and, similarly, a second object or step could be termed a first object or step, without departing from the scope of the invention. The first object or step, and the second object or step, are both objects or steps, respectively, but they are not to be considered the same object or step.

The terminology used in the description of the invention herein is for the purpose of describing particular embodiments and is not intended to be limiting of the invention. As used in the description of the invention and the appended claims, the singular forms "a," "an" and "the" are intended to include the plural forms as well, unless the context clearly indicates otherwise. It will also be understood that the term "and/or" as used herein refers to and encompasses any possible combination of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context.

Those with skill in the art will appreciate that while some terms in this disclosure may refer to absolutes, *e.g., all* of the components of a wavefield, *all* source receiver traces, *each* of a plurality of objects, etc., the methods and techniques disclosed herein may also be performed on fewer than all of a given thing, e.g., performed on one or more components and/or performed on one or more source receiver traces. Accordingly, in instances in the disclosure where an absolute is used, the disclosure may also be interpreted to be referring to a subset.

Computing Systems

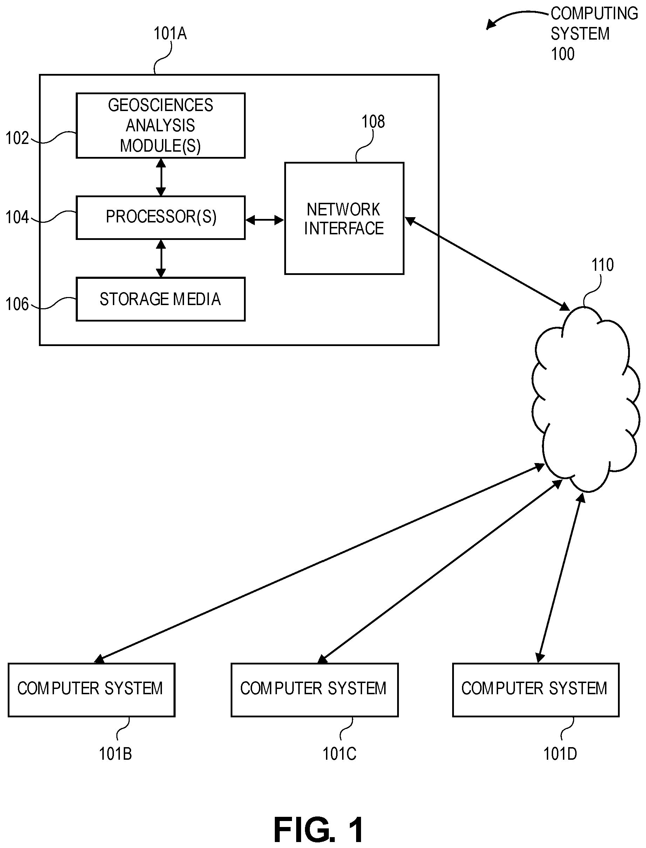

**Figure 1** illustrates an example computing system 100, according to an embodiment. The computing system 100 can be an individual computer system 101A or an arrangement of distributed computer systems. The computer system 101A includes one or more geosciences analysis modules 102 that are configured to perform various tasks according to some embodiments, such as one or more methods disclosed herein. To perform these various tasks, geosciences analysis module 102 executes independently, or in coordination with, one or more processors 104, which is (or are) connected to one or more storage media 106. The processor(s) 104 is (or are) also connected to a network interface 108 to allow the computer system 101A to communicate over a data network 110 with one or more additional computer systems and/or computing systems, such as 101B, 101C, and/or 101D (note that computer systems 101B, 101C and/or 101D may or may not share the same architecture as computer system 101A, and may be located in different physical locations, e.g., computer systems 101A and 101B may be on a ship underway on the ocean, while in communication with one or more computer systems such as 101C and/or 101D that are located in one or more data centers on shore, other ships, and/or located in varying countries on different continents). Note that data network 110 may be a private network, it may use portions of public networks, it may include remote storage and/or applications processing capabilities (e.g., cloud computing).

A processor can include a microprocessor, microcontroller, processor module or subsystem, programmable integrated circuit, programmable gate array, or another control or computing device.

The storage media 106 can be implemented as one or more computer-readable or machine-readable storage media. Note that while in the example embodiment of **Figure 1** storage media 106 is depicted as within computer system 101A, in some embodiments, storage media 106 may be distributed within and/or across multiple internal and/or external enclosures of computing system 101A and/or additional computing systems. Storage media 106 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy and removable disks; other magnetic media including tape; optical media such as compact disks (CDs) or digital video disks (DVDs), BluRays or any other type of optical media; or other types of storage devices. Note that the instructions discussed above can be provided on one computer-readable or machine-readable storage medium, or alternatively, can be provided on multiple computer-readable or machine-readable storage media distributed in a large system having possibly plural nodes and/or non-transitory storage means. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

It should be appreciated that computer system 101A is one example of a computing system, and that computer system 101A may have more or fewer components than shown, may combine additional components not depicted in the example embodiment of **Figure 1,** and/or computer system 101A may have a different configuration or arrangement of the components depicted in **Figure 1.** The various components shown in **Figure** 1 may be implemented in hardware, software, or a combination of both, hardware and software, including one or more signal processing and/or application specific integrated circuits.

It should also be appreciated that while no user input/output peripherals are illustrated with respect to computer systems 101A, 101B, 101C, and 101D, many embodiments of computing system 100 include computer systems with keyboards, mice, touch screens, displays, etc. Some computer systems in use in computing system 100 may be desktop workstations, laptops, tablet computers, smartphones, server computers, etc.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are included within the scope of protection.

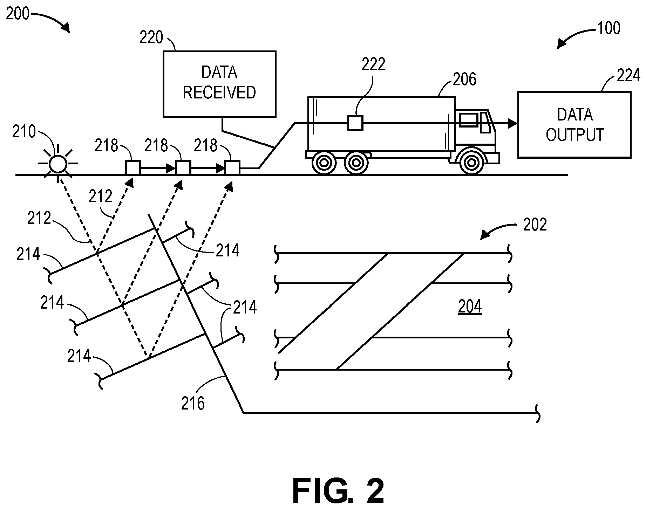

**Figures 2-5** illustrate simplified, schematic views of an oilfield 200 having a subterranean formation 202 containing a reservoir 204 therein in accordance with implementations of various technologies and techniques described herein. More particularly, **Figure 2** illustrates a survey operation being performed by a survey tool, such as a seismic truck 206.1, to measure properties of the subterranean formation, according to an embodiment. The survey operation is a seismic survey operation for producing sound vibrations. In **Figure 2,** one such sound vibration, e.g., sound vibration 212 generated by a source 210, reflects off horizons 214 in an earth formation 216. A set of sound vibrations is received by sensors, such as geophone-receivers 218, situated on the earth's surface. The data received 220 is provided as input data to a computer 222.1 of a seismic truck 206.1, and responsive to the input data, the computer 222.1 generates seismic data output 224. This seismic data output may be stored, transmitted or further processed as desired, for example, by data reduction.

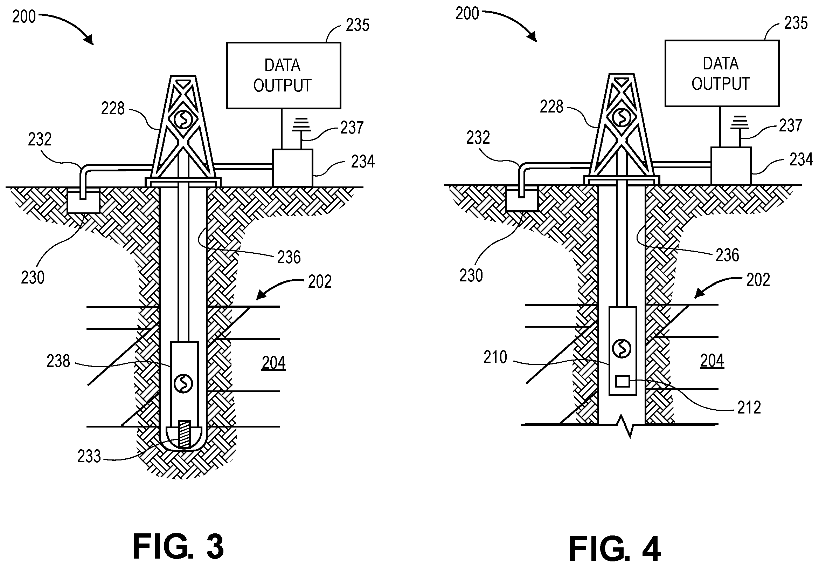

**Figure 3** illustrates a drilling operation being performed by drilling tools 206.2 suspended by a rig 228 and advanced into subterranean formations 202 to form a wellbore 236, according to an embodiment. A mud pit 230 is used to draw drilling mud into the drilling tools via a flow line 232 for circulating drilling mud down through the drilling tools, then up the wellbore 236 and back to the surface. The drilling mud may be filtered and returned to the mud pit. A circulating system may be used for storing, controlling, or filtering the flowing drilling mud. The drilling tools are advanced into the subterranean formations 202 to reach the reservoir 204. Each well may target one or more reservoirs. The drilling tools are adapted for measuring downhole properties using logging while drilling tools. The logging while drilling tools may also be adapted for taking core sample 233 as shown.

Computer facilities may be positioned at various locations about the oilfield 200 (e.g., the surface unit 234) and/or at remote locations. The surface unit 234 may be used to communicate with the drilling tools and/or offsite operations, as well as with other surface or downhole sensors. The surface unit 234 is capable of communicating with the drilling tools to send commands to the drilling tools, and to receive data therefrom. The surface unit 234 may also collect data generated during the drilling operation and produce data output 235, which may then be stored or transmitted.

Sensors (S), such as gauges, may be positioned about the oilfield 200 to collect data relating to various oilfield operations as described previously. As shown, the sensor (S) is positioned in one or more locations in the drilling tools and/or at the rig 228 to measure drilling parameters, such as weight on bit, torque on bit, pressures, temperatures, flow rates, compositions, rotary speed, and/or other parameters of the field operation. The sensors (S) may also be positioned in one or more locations in the circulating system.

The drilling tools 206.2 may include a bottom hole assembly (BHA) (not shown), generally referenced, near the drill bit (e.g., within several drill collar lengths from the drill bit). The bottom hole assembly includes capabilities for measuring, processing, and storing information, as well as communicating with the surface unit 234. The bottom hole assembly further includes drill collars for performing various other measurement functions.

The bottom hole assembly may include a communication subassembly that communicates with the surface unit 234. The communication subassembly is adapted to send signals to and receive signals from the surface using a communications channel such as mud pulse telemetry, electro-magnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic or other known telemetry systems.

The wellbore may be drilled according to a drilling plan that is established prior to drilling. The drilling plan may set forth equipment, pressures, trajectories and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected

The data gathered by sensors (S) may be collected by the surface unit 234 and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

The surface unit 234 may include a transceiver 237 to allow communications between the surface unit 234 and various portions of the oilfield 200 or other locations. The surface unit 234 may also be provided with or functionally connected to one or more controllers (not shown) for actuating mechanisms at the oilfield 200. The surface unit 234 may then send command signals to the oilfield 200 in response to data received. The surface unit 234 may receive commands via a transceiver 237 or may itself execute commands to the controller. A processor may be provided to analyze the data (locally or remotely), make the decisions and/or actuate the controller. In this manner, the oilfield 200 may be selectively adjusted based on the data collected. This technique may be used to optimize (or improve) portions of the field operation, such as controlling drilling, weight on bit, pump rates, or other parameters. These adjustments may be made automatically based on computer protocol, and/or manually by an operator. In some cases, well plans may be adjusted to select optimum (or improved) operating conditions, or to avoid problems.

**Figure 4** illustrates a wireline operation being performed by a wireline tool 206.3 suspended by the rig 228 and into the wellbore 236 of **Figure 3,** according to an embodiment. The wireline tool 206.3 is adapted for deployment into the wellbore 236 for generating well logs, performing downhole tests and/or collecting samples. The wireline tool 206.3 may be used to provide another method and apparatus for performing a seismic survey operation. The wireline tool 206.3 may, for example, have an explosive, radioactive, electrical, or acoustic energy source 244 that sends and/or receives electrical signals to surrounding subterranean formations 202 and fluids therein.

The wireline tool 206.3 may be operatively connected to, for example, geophones 218 and the computer 222.1 of the seismic truck 206.1 of **Figure 2.** The wireline tool 206.3 may also provide data to the surface unit 234. The surface unit 234 may collect data generated during the wireline operation and may produce a data output 235 that may be stored or transmitted. The wireline tool w06.3 may be positioned at various depths in the wellbore w36 to provide a survey or other information relating to the subterranean formation w02.

The sensors (S), such as gauges, may be positioned about the oilfield 200 to collect data relating to various field operations as described previously. As shown, the sensor S is positioned in the wireline tool 206.3 to measure downhole parameters which relate to, for example porosity, permeability, fluid composition and/or other parameters of the field operation.

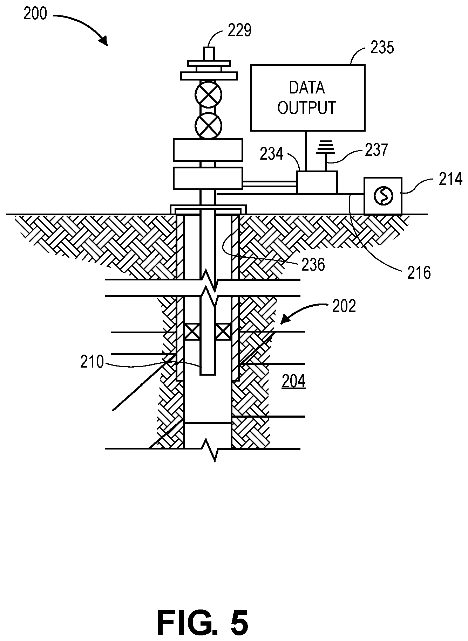

**Figure 5** illustrates a production operation being performed by a production tool 206.4 deployed from a production unit or Christmas tree 229 and into the completed wellbore 236 for drawing fluid from the downhole reservoirs into the surface facilities 242, according to an embodiment. The fluid flows from the reservoir 204 through perforations in the casing (not shown) and into the production tool 206.4 in the wellbore 236 and to the surface facilities 242 via a gathering network 246.

The sensors (S), such as gauges, may be positioned about the oilfield 200 to collect data relating to various field operations as described previously. As shown, the sensor (S) may be positioned in the production tool 206.4 or associated equipment, such as the Christmas tree 229, the gathering network 246, the surface facility 242, and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While **Figures 3-5** illustrate tools used to measure properties of an oilfield, it will be appreciated that the tools may be used in connection with non-oilfield operations, such as gas fields, mines, aquifers, storage or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of **Figures 2-5** are intended to provide a brief description of an example of a field usable with oilfield application frameworks. Part of, or the entirety, of the oilfield 200 may be on land, water, and/or sea. Also, while a single field measured at a single location is depicted, oilfield applications may be utilized with any combination of one or more oilfields, one or more processing facilities and one or more wellsites.

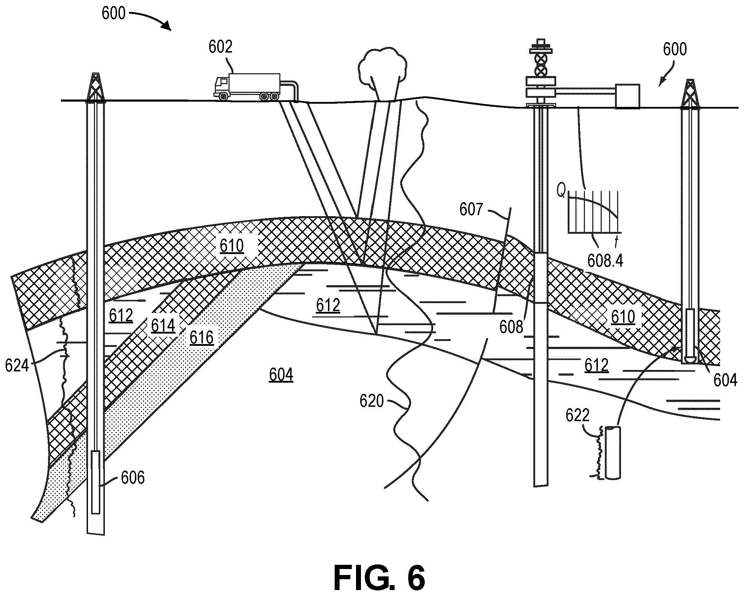

**Figure 6** illustrates a schematic view, partially in cross section of an oilfield 600 having data acquisition tools 602.1, 602.2, 602.3 and 602.4 positioned at various locations along an oilfield 600 for collecting data of a subterranean formation 604, according to an embodiment. Data acquisition tools 602.1-602.4 may be the same as data acquisition tools 206.1-206.4 of **Figures 2-5,** respectively, or others not depicted. As shown, data acquisition tools 602.1-602.4 generate data plots or measurements 608.1-608.4, respectively. These data plots are depicted along the oilfield 600 to demonstrate the data generated by the various operations.

The data plots 608.1-608.3 are examples of static data plots that may be generated by the data acquisition tools 602.1-602.3, respectively; however, it should be understood that the data plots 608.1-608.3 may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

The static data plot 608.1 is a seismic two-way response over a period of time. The static plot 608.2 is core sample data measured from a core sample of the formation 604. The core sample may be used to provide data, such as a graph of the density, porosity, permeability, or some other physical property of the core sample over the length of the core. Tests for density and viscosity may be performed on the fluids in the core at varying pressures and temperatures. The static data plot 608.3 is a logging trace that may provide a resistivity or other measurement of the formation at various depths.

A production decline curve or graph 608.4 is a dynamic data plot of the fluid flow rate over time. The production decline curve may provide the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 604 has a plurality of geological formations 606.1-606.4. As shown, this structure has several formations or layers, including a shale layer 606.1, a carbonate layer 606.2, a shale layer 606.3 and a sand layer 606.4. A fault 607 extends through the shale layer 606.1 and the carbonate layer 606.2. The static data acquisition tools are adapted to take measurements and detect characteristics of the formations.

While a specific subterranean formation with specific geological structures is depicted, it will be appreciated that the oilfield 600 may contain a variety of geological structures and/or formations, sometimes having extreme complexity. In some locations (e.g., below the water line), fluid may occupy pore spaces of the formations. Each of the measurement devices may be used to measure properties of the formations and/or its geological features. While each acquisition tool is shown as being in specific locations in the oilfield 600, it will be appreciated that one or more types of measurement may be taken at one or more locations across one or more fields or other locations for comparison and/or analysis.

The data collected from various sources, such as the data acquisition tools of **Figure 6,** may then be processed and/or evaluated. Seismic data displayed in the static data plot 608.1 from the data acquisition tool 602.1 may be used by a geophysicist to determine characteristics of the subterranean formations and features. The core data shown in the static plot 608.2 and/or log data from the well log 608.3 may be used by a geologist to determine various characteristics of the subterranean formation. The production data from the graph 608.4 may be used by the reservoir engineer to determine fluid flow reservoir characteristics. The data analyzed by the geologist, geophysicist and the reservoir engineer may be analyzed using modeling techniques.

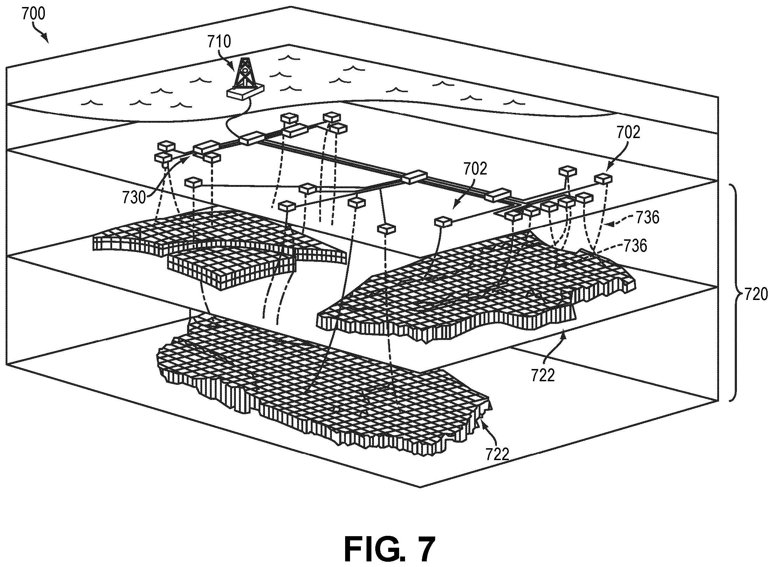

**Figure 7** illustrates an oilfield 700 for performing production operation, according to an embodiment. As shown, the oilfield has a plurality of wellsites 702 operatively connected to a central processing facility 754. The oilfield configuration of **Figure 7** is not intended to limit the scope of the oilfield application system. Part, or all, of the oilfield may be on land and/or sea. Also, while a single oilfield with a single processing facility and a plurality of wellsites is depicted, any combination of one or more oilfields, one or more processing facilities and one or more wellsites may be present.

Each wellsite 702 has equipment that forms wellbore 736 into the earth. The wellbores extend through subterranean formations 706 including reservoirs 704. These reservoirs 704 contain fluids, such as hydrocarbons. The wellsites draw fluid from the reservoirs and pass them to the processing facilities via surface networks 744. The surface networks 744 have tubing and control mechanisms for controlling the flow of fluids from the wellsite to the processing facility 754.

Attention is now directed to methods, techniques, and workflows for planning, forecasting, and/or optimizing production related systems (e.g., model selections, reservoir maps, wells, etc.) in accordance with some embodiments. Some operations in the processing procedures, methods, techniques, and workflows disclosed herein may be combined and/or the order of some operations may be changed. Those with skill in the art will recognize that in the geosciences and/or other multi-dimensional data processing disciplines, various interpretations, sets of assumptions, and/or domain models such as velocity models, may be refined in an iterative fashion; this concept is applicable to the procedures, methods, techniques, and workflows as discussed herein. This iterative refinement can include use of feedback loops executed on an algorithmic basis, such as at a computing device (e.g., computing system 100, **Figure 1),** and/or through manual control by a user who may make determinations regarding whether a given step, action, template, or model has become sufficiently accurate.

## Extrapolating Green's Function Estimated Using Multi-Dimensional Deconvolution Beyond Receiver Grid Through Deep Learning

In principle, the application of multi-dimensional deconvolution (MDD) overcomes these limitations described above any geological scenario; thus, stabilizing the estimation of Green's function. The least-squares MDD formulation for a monochromatic wavefield solves the following set of equations:

$$\min_{\mathbf{R}} \frac{1}{2} \| \mathbf{C} - \mathbf{\Gamma R} \|_F^2, \qquad (1)$$

where C=D'U represents the monochromatic extended image volume, and $\Gamma$ = **D'D** represents the radiation pattern of the sources, termed as point spread function.

The monochromatic upgoing (U) and downgoing wavefields (D) are of size $N_s \times N_r$ and $N_s \times N_r$, respectively, where $\| \cdot \|_F^2$ is the Frobenius-norm defined as the square root of the sum of the absolute squares of its elements. The Green's function R is of size $N_r \times N_{vs}$ where $N_{vs} = N_r$. Here, $N_r$, $N_s$ are the number of receivers and sources, and $N_{vs}$ represents the virtual sources at the receiver's location. Both C and $\Gamma$ are expressed in the frequency-wavenumber domain. As compared to MDD, in UDD, the deconvolution problem may be solved by performing element-wise division:

$$\mathbf{R} = \mathbf{\Gamma} \oslash (\mathbf{C} + \in) \qquad (2)$$

where $\oslash$ represents the Hadamard-division, and $\varepsilon$ represent the small noise to stabilize the element-wise division.

The choice of performing UDD or MDD on a commercial project depends upon the complexity of the data apart from evaluating the complexity of performing UDD and MDD on a given dataset. The complexity of UDD and MDD may be divided into various sub-categories as explained below.

*Quality*

Since UDD includes one-dimensional deconvolution as compared to MDD, which uses three to five dimensions of seismic data to attenuate multiples, or overburden effects, MDD produces a Green's function with better attenuation of multiples present in the data.

*Cost of Transform domain*

While up-down deconvolution can be performed in the frequency-wavenumber domain, the common domain choice is Radon, as quality control of multiple attenuation is simpler in Radon domain as compared to the frequency-wavenumber domain. Due to the usage of Radon transforms, the cost of solving equations (1) and (2) are similar, even though equation (2) involves element-wise division, and equation (1) inverts the matrix in least-squares sense. This is because fast Fourier transform is orthogonal in nature whereas Radon is not. Thus, to make Radon invertible in least-squares sense, the data sampling may be increased while mapping gathers from time-space to Radon domain to perform UDD. Often, this increase in sampling is of the order of 8-10. Thus, the number of traces going through deconvolution in UDD is higher than MDD.

*Interpolation complexity*

To enable the solution of equation (1), the variable $\Gamma$ may be created, which involves performing the integration along receivers. For a stable integration, denser sampled data along the receivers may be measured. Often, for ocean-bottom node scenarios, the data may be acquired with sparser receivers, to reduce the acquisition cost. Thus, to enable the integration along the receivers, interpolation may be performed. While proposed using reciprocity to stabilize the interpolation along the receivers, with subsampling of 200-300 m along receivers, producing a stable interpolation result is time-consuming process as an extensive amount of quality control is performed to make sure interpolated data is useful in nature. As a result, testing the interpolation framework contributes to an increase in applying MDD to large-scale seismic data acquired in ocean-bottom node scenario. As UDD is applied on a common receiver gathers, this lessens the complexity of performing interpolation along common receiver gather in UDD framework.

*Halo Issue in MDD*

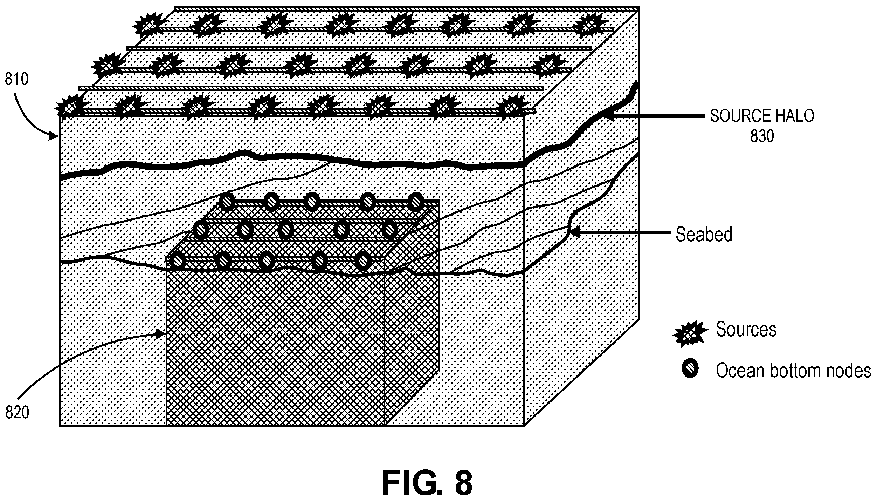

**Figure 8** illustrates an acquisition setup of an ocean bottom node scenario, according to an embodiment. The larger shaded box 810 represents the output grid from UDD process, and the smaller shaded box 820 represents the output grid from MDD process. There is a halo region 830 where the estimated Green's function using MDD process is not available.

While MDD provides the more accurate understanding of the subsurface, the outcome of MDD is restricted to the receiver grid (i.e., the estimated Green's function $G_{MDD}$ is restricted to the area where the receivers are placed on the ocean bottom **(Figure 8))**. However, the outcome of UDD covers the full acquisition area (i.e., the estimated Green's function $G_{UDD}$ is of size $N_s \times N_r$). This is because UDD is a one-dimensional process, so the outcome of UDD is not restricted to the receiver grid. This creates a halo region in the MDD as compared to UDD as shown in **Figure 8,** which may be addressed before the estimated Green's function can be used for further post-processing steps such as imaging.

*GAN*

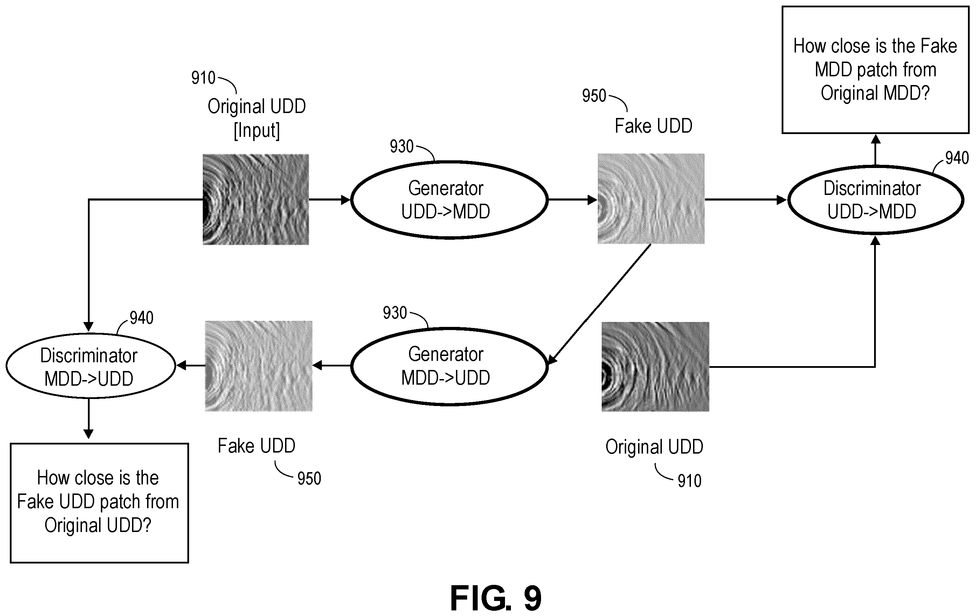

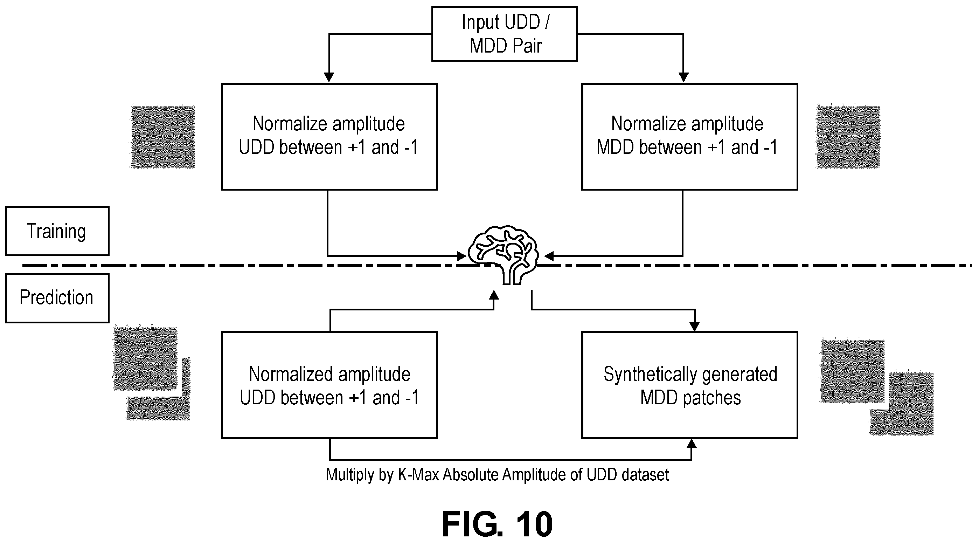

**Figure 9** illustrates a generative adversarial network (GAN) based deep learning workflow to obtain MDD from UDD, according to an embodiment. **Figure 10** illustrates a workflow for training and predicting a ML-generated synthetic MDD equivalent of corresponding UDD patch or gathers, according to an embodiment. To map UDD to MDD technology, an image-to-image translation technique may be used in deep learning where the idea is to train a network to perform an image synthesis task that, using a given image, generates a new target image in a controlled environment. One such example of a controlled environment is access to trained pair of images, which can be used to perform an image-to-image translation task. Some of the image-to-image translation tasks involve a dataset including paired examples whereas others can work in scenarios where generating a paired training dataset is a limitation or quite challenging and expensive process. The UDD-to-MDD mapping falls in the latter category.

To address the mapping, the GAN architecture from the deep learning may be used where a GAN model architecture is used. Although GAN is designed for unpaired images, in one example scenario, it can still generate a subset of paired image examples to reduce the computational burden of the training process. **Figure 9** illustrates the GAN architecture and shows the forward cycle consistency loss. Even though the backward cycle consistency loss can still be used in the framework, as the paired images are coming from a similar distribution, they may be intentionally avoided to reduce the computational burden of training and storing a large GAN architecture using both the forward and backward network architectures. Figure **10** shows the normalization process to prepare training data examples to train the GAN loss function.

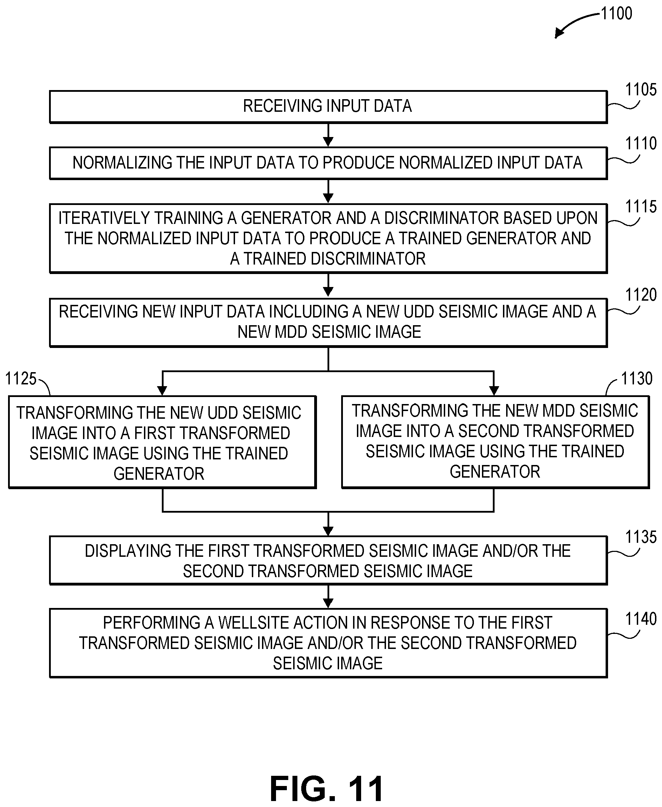

**Figure 11** illustrates a flowchart of a method 1100 for transforming seismic images, according to an embodiment. An illustrative order of the method 1100 is provided below; however, one or more portions of the method 1100 may be performed in a different order, simultaneously, repeated, or omitted. At least a portion of the method 1100 may be performed with a computing system.

The method 1100 may include receiving input data, as at 1105. The input data may be or include a first pair of images. The first pair may include an original upward-downward diffusion (UDD) seismic image 910 (see **Figure 9)** and/or an original multi-dimensional deconvolution (MDD) seismic image.

The method 1100 may also include normalizing the input data to produce normalized input data, as at 1110. Normalizing the input data may modify amplitudes of the original UDD seismic image 910 (see **Figure 9)** and/or the original MDD seismic image to be in a range (e.g., from -1 to +1).

The method 1100 may also include (e.g., iteratively) training a generator and a discriminator based upon the normalized input data to produce a trained generator 930 and a trained discriminator 940 (see **Figure 9),** as at 1115. Iteratively training the generator may include training the generator to transform the original UDD seismic image to the original MDD seismic image. Training the generator may include generating a fake MDD seismic image based upon the original UDD seismic image 910 (see **Figure 9).** Training the generator may also include determining an adversarial loss that occurs in response to generating the fake MDD seismic image. The adversarial loss may be determined using the discriminator.

Example

G: The Generator (GUDD→MDD)
D: The Discriminator (DUDD→MDD)
x: A real image from the target domain (*Original MDD*).
z: An image from the source domain *(Original UDD).*

A. The Discriminator's Goal (Minimize LD)

The Discriminator's loss function minimizes the squared error for both real and fake images.

-

$$LD(LSGAN)=21(Ex{\sim}pdata(x)[(D(x)-1)2]+Ez{\sim}psource(z)[D(G(z))2])(D(x)-1)2:$$

This term pushes the Discriminator's output for a real image x towards 1.
- $D(G(z))2$: This term pushes the Discriminator's output for a fake image G(z) towards 0.

The Discriminator minimizes this combined error to become proficient at labeling.

B. The Generator's Goal (Minimize LG)

The Generator's goal is to fool the Discriminator. It wants the Discriminator to label its fake images as 1 (real).

- 

$$LG(LSGAN)=21Ez{\sim}psource(z)[(D(G(z))-1)2](D(G(z))-1)2:$$

By minimizing this term, the Generator learns to produce fake images G(z) that cause the Discriminator D to output a value as close to 1 as possible.

Training the generator may also include generating a reconstructed UDD seismic image using the generator based upon the fake MDD seismic image. Training the generator may also include determining a difference between the original UDD seismic image 910 (see **Figure** 9) and the reconstructed UDD seismic image, which represents a forward cycle consistency loss. Training the generator may also include adjusting weights of the generator based upon the adversarial loss and/or the forward cycle consistency loss, which causes a new original MDD seismic image to be more difficult for the discriminator to distinguish from a new fake MDD seismic image that is generated by the generator. Training the generator may also or instead include adjusting the parameters. The parameters include weights and biases.

Iteratively training the discriminator may also include training the discriminator to distinguish the original MDD seismic image from the fake MDD seismic image. Training the discriminator may include determining a first loss to classify the original MDD seismic image as real. Training the discriminator may also include determining a second loss to classify the fake MDD seismic image as fake. Training the discriminator may also include adjusting weights of the discriminator based upon the first and second losses to more accurately distinguish the new original MDD seismic image from the new fake MDD seismic image.

Iteratively training the generator may also or instead include training the generator to transform the original MDD seismic image to the original UDD seismic image 910 (see **Figure 9)**. Training the generator may include generating a fake UDD seismic image 950 (see **Figure 9)** based upon the original MDD seismic image. Training the generator may also include determining an adversarial loss that occurs in response to generating the fake UDD seismic image 950 (see **Figure 9)**. The adversarial loss may be determined using the discriminator. Training the generator may also include adjusting weights of the generator based upon the adversarial loss, which causes a new original UDD seismic image 910 (see **Figure 9)** to be more difficult for the discriminator to distinguish from a new fake UDD seismic image that is generated by the generator.

Iteratively training the discriminator may also or instead include training the discriminator to distinguish the real UDD seismic image from the fake UDD seismic image 950 (see **Figure 9)**. Training the discriminator may include determining a third loss to classify the original UDD seismic image 910 (see **Figure 9)** as real. Training the discriminator may also include determining a fourth loss to classify the fake UDD seismic image 950 (see **Figure 9)** as fake. Training the discriminator may also include adjusting weights of the discriminator based upon the third and fourth losses to more accurately distinguish the new original UDD seismic image 910 (see **Figure 9)** from the new fake UDD seismic image.

The method 1100 may also include receiving new input data, as at 1120. The new input data may be or include the new UDD seismic image and/or the new MDD seismic image.

The method 1100 may also include transforming the new UDD seismic image into a first transformed seismic image using the trained generator 930 (see **Figure 9),** as at 1125. The first transformed seismic image may be the same as or similar to the new MDD seismic image.

The method 1100 may also or instead include transforming the new MDD seismic image into a second transformed seismic image using the trained generator 930 (see **Figure 9),** as at 1130. The second transformed seismic image may be the same as or similar to the new UDD seismic image. The level of similarity is measured in the form of amplitude of pixels. For example, the mean squared error (MSE) may be tracked and may be greater than a predetermined value (e.g., 90%, 95%, 99%) to be the same or similar. Other metrics may include a structural similarity index measure (SSIM), which evaluates the perceived similarity, considering structural information, luminance, and contrast of seismic features.

The method 1100 may also include displaying the first transformed seismic image and/or the second transformed seismic image, as at 1135.

The method 1100 may also include performing a wellsite action based upon and/or in response to the first transformed seismic image and/or the second transformed seismic image, as at 1140. The wellsite action may be or include generating and/or transmitting a signal (e.g., using a computing system) that recommends, instructs, or causes a physical action to occur (e.g., at a wellsite). The wellsite action may also or instead include performing the physical action. The physical action may include selecting where to drill a wellbore, drilling the wellbore, varying a weight and/or torque on a drill bit that is drilling the wellbore, determining a location and/or amount of hydrocarbons in the subsurface formation and then varying a drilling trajectory of the wellbore toward the hydrocarbons, varying a concentration and/or flow rate of a fluid pumped into the wellbore, or the like.

While any discussion of or citation to related art in this disclosure may or may not include some prior art references, applicant neither concedes nor acquiesces to the position that any given reference is prior art or analogous prior art.

The foregoing description, for purposes of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to explain the principles of the invention and its practical applications, to thereby enable others skilled in the art to utilize the invention and various embodiments with various modifications as are suited to the particular use contemplated.

**Claims**

1. A method for transforming seismic images, the method comprising

   receiving input data, wherein the input data comprises an original upward-downward diffusion (UDD) seismic image and an original multi-dimensional deconvolution (MDD) seismic image; and
   training a generator and a discriminator based upon the input data to produce a trained generator and a trained discriminator, preferably further comprising:

   generating a transformed seismic image using the trained generator; and
   displaying the transformed seismic image.

2. The method of claim 1, wherein training the generator comprises training the generator to transform the original UDD seismic image to the original MDD seismic image, which includes generating a fake MDD seismic image based upon the original UDD seismic image and/or wherein training the generator comprises training the generator to transform the original MDD seismic image to the original UDD seismic image, which includes generating a fake UDD seismic image based upon the original MDD seismic image.

3. The method of claim 2, wherein training the discriminator comprises training the discriminator to distinguish the original MDD seismic image from the fake MDD seismic image.

4. The method of claim 2 or 3, wherein training the discriminator comprises training the discriminator to distinguish the real UDD seismic image from the fake UDD seismic image.

5. The method of any one of the preceding claims, further comprising receiving new input data, wherein the new input data comprises a new original UDD seismic image and/or a new original MDD seismic image.

6. The method of claim 5, further comprising transforming the new original UDD seismic image into a transformed seismic image using the trained generator, wherein the transformed seismic image is the same as or similar to the new original MDD seismic image and/or further comprising transforming the new MDD seismic image into a transformed seismic image using the trained generator, wherein the transformed seismic image is the same as or more similar to the new original UDD seismic image.

7. The method of any one of the preceding claims, further comprising performing a physical wellsite action based upon or in response to a transformed seismic image that is generated using the trained generator.

8. A computing system, comprising:

one or more processors; and

a memory system comprising one or more non-transitory computer-readable media storing instructions that, when executed by at least one of the one or more processors, cause the computing system to perform operations, the operations comprising:

receiving input data, wherein the input data comprises an original upward-downward diffusion (UDD) seismic image and an original multi-dimensional deconvolution (MDD) seismic image;

training a generator and a discriminator based upon the input data to produce a trained generator and a trained discriminator, wherein training comprises:

training the generator to transform the original UDD seismic image to the original MDD seismic image, which includes generating a fake MDD seismic image based upon the original UDD seismic image;

training the discriminator to distinguish the original MDD seismic image from the fake MDD seismic image;

training the generator to transform the original MDD seismic image to the original UDD seismic image, which includes generating a fake UDD seismic image based upon the original MDD seismic image; and

training the discriminator to distinguish the real UDD seismic image from the fake UDD seismic image;

receiving new input data, wherein the new input data comprises a new original UDD seismic image and/or a new original MDD seismic image; and

transforming the new original UDD seismic image into a first transformed seismic image using the trained generator, wherein the first transformed seismic image is the same as or more similar to the new original MDD seismic image; or

transforming the new MDD seismic image into a second transformed seismic image using the trained generator, wherein the second transformed seismic image is the same as or more similar to the new original UDD seismic image.

9. The computing system of claim 8, wherein training the generator to transform the original UDD seismic image to the original MDD seismic image comprises:

determining an adversarial loss that occurs in response to generating the fake MDD seismic image, wherein the adversarial loss is determined using the discriminator;

generating a reconstructed UDD seismic image using the generator based upon the fake MDD seismic image;

determining a difference between the original UDD seismic image and the reconstructed UDD seismic image, which represents a forward cycle consistency loss; and

adjusting weights of the generator based upon the adversarial loss and the forward cycle consistency loss, which causes the new original MDD seismic image to be more difficult for the discriminator to distinguish from a new fake MDD seismic image that is generated by the generator.

10. The computing system of claim 9, wherein training the discriminator to distinguish the original MDD seismic image from the fake MDD seismic image comprises:

determining a first loss to classify the original MDD seismic image as real;

determining a second loss to classify the fake MDD seismic image as fake; and

adjusting weights of the discriminator based upon the first and second losses to more accurately distinguish the new original MDD seismic image from the new fake MDD seismic image.

11. The computing system of any one of the preceding claims 8 - 10, wherein training the generator to transform the original MDD seismic image to the original UDD seismic image comprises:

determining an adversarial loss that occurs in response to generating the fake UDD seismic image, wherein the adversarial loss is determined using the discriminator; and

adjusting weights of the generator based upon the adversarial loss, which causes the new original UDD seismic image to be more difficult for the discriminator to distinguish from a new fake UDD seismic image that is generated by the generator.

12. The computing system of claim 11, wherein training the discriminator to distinguish the real UDD seismic image from the fake UDD seismic image comprises:

determining a first loss to classify the original UDD seismic image as real;

determining a second loss to classify the fake UDD seismic image as fake; and

adjusting weights of the discriminator based upon the first and second losses to more accurately distinguish the new original UDD seismic image from the new fake UDD seismic image.

13. A non-transitory computer-readable medium storing instructions that, when executed by one or more processors of a computing system, cause the computing system to perform operations, the operations comprising:

receiving input data, wherein the input data comprises an original upward-downward diffusion (UDD) seismic image and an original multi-dimensional deconvolution (MDD) seismic image;

normalizing the input data to produce normalized input data, wherein normalizing the input data modifies amplitudes of the original UDD seismic image and the original MDD seismic image to be in a range from -1 to +1;

iteratively training a generator and a discriminator based upon the normalized input data to produce a trained generator and a trained discriminator, wherein iteratively training comprises:

(A) training the generator to transform the original UDD seismic image to the original MDD seismic image, wherein training the generator comprises:

generating a fake MDD seismic image based upon the original UDD seismic image;

determining an adversarial loss that occurs in response to generating the fake MDD seismic image, wherein the adversarial loss is determined using the discriminator;

generating a reconstructed UDD seismic image using the generator based upon the fake MDD seismic image;

determining a difference between the original UDD seismic image and the reconstructed UDD seismic image, which represents a forward cycle consistency loss; and

adjusting weights of the generator based upon the adversarial loss and the forward cycle consistency loss, which causes a new original MDD seismic image to be more difficult for the discriminator to distinguish from a new fake MDD seismic image that is generated by the generator;

(B) training the discriminator to distinguish the original MDD seismic image from the fake MDD seismic image, wherein training the discriminator comprises:

determining a first loss to classify the original MDD seismic image as real;

determining a second loss to classify the fake MDD seismic image as fake; and

adjusting weights of the discriminator based upon the first and second losses to more accurately distinguish the new original MDD seismic image from the new fake MDD seismic image;

(C) training the generator to transform the original MDD seismic image to the original UDD seismic image, wherein training the generator comprises:

generating a fake UDD seismic image based upon the original MDD seismic image;

determining an adversarial loss that occurs in response to generating the fake UDD seismic image, wherein the adversarial loss is determined using the discriminator; and

adjusting weights of the generator based upon the adversarial loss, which causes a new original UDD seismic image to be more difficult for the discriminator to distinguish from a new fake UDD seismic image that is generated by the generator;

(D) training the discriminator to distinguish the real UDD seismic image from the fake UDD seismic image, wherein training the discriminator comprises:

determining a third loss to classify the original UDD seismic image as real;

determining a fourth loss to classify the fake UDD seismic image as fake; and

adjusting weights of the discriminator based upon the third and fourth losses to more accurately distinguish the new original UDD seismic image from the new fake UDD seismic image;

receiving new input data, wherein the new input data comprises the new UDD seismic image and/or the new MDD seismic image;

transforming the new UDD seismic image into a first transformed seismic image using the trained generator, wherein the first transformed seismic image is the same as the new MDD seismic image; and
transforming the new MDD seismic image into a second transformed seismic image using the trained generator, wherein the second transformed seismic image is the same as the new UDD seismic image.

14. The non-transitory computer-readable medium of claim 13, wherein the operations further comprise displaying the first transformed seismic image and/or the second transformed seismic image and/or wherein the operations further comprise performing a wellsite action based upon or in response to the first transformed seismic image and/or the second transformed seismic image.

15. The non-transitory computer-readable medium of claim 14, wherein the wellsite action comprises generating and/or transmitting a signal that recommends, instructs, or causes a physical action to occur, wherein the physical action preferably comprises selecting where to drill a wellbore, drilling the wellbore, varying a weight and/or torque on a drill bit that is drilling the wellbore, determining a location and/or amount of hydrocarbons in the subsurface formation and then varying a drilling trajectory of the wellbore toward the hydrocarbons, varying a concentration and/or flow rate of a fluid pumped into the wellbore, or a combination thereof.

FIG. 1

**FIG. 2**

FIG. 4

FIG. 3

**FIG. 5**

**FIG. 6**

EP 4 686 961 A1

**FIG. 7**

FIG. 8

FIG. 9

EP 4 686 961 A1

FIG. 10

1100

| RECEIVING INPUT DATA | 1105 |

↓

| NORMALIZING THE INPUT DATA TO PRODUCE NORMALIZED INPUT DATA | 1110 |

↓

| ITERATIVELY TRAINING A GENERATOR AND A DISCRIMINATOR BASED UPON THE NORMALIZED INPUT DATA TO PRODUCE A TRAINED GENERATOR AND A TRAINED DISCRIMINATOR | 1115 |

↓

| RECEIVING NEW INPUT DATA INCLUDING A NEW UDD SEISMIC IMAGE AND A NEW MDD SEISMIC IMAGE | 1120 |

1125

| TRANSFORMING THE NEW UDD SEISMIC IMAGE INTO A FIRST TRANSFORMED SEISMIC IMAGE USING THE TRAINED GENERATOR |

1130

| TRANSFORMING THE NEW MDD SEISMIC IMAGE INTO A SECOND TRANSFORMED SEISMIC IMAGE USING THE TRAINED GENERATOR |

↓

| DISPLAYING THE FIRST TRANSFORMED SEISMIC IMAGE AND/OR THE SECOND TRANSFORMED SEISMIC IMAGE | 1135 |

↓

| PERFORMING A WELLSITE ACTION IN RESPONSE TO THE FIRST TRANSFORMED SEISMIC IMAGE AND/OR THE SECOND TRANSFORMED SEISMIC IMAGE | 1140 |

# FIG. 11

Europäisches
Patentamt

European
Patent Office

Office européen
des brevets

# EUROPEAN SEARCH REPORT

**Application Number**

EP 25 19 3506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PICETTI FRANCESCO ET AL: "Seismic image processing through the generative adversarial network", INTERPRETATION, vol. 7, no. 3, 1 August 2019 (2019-08-01), pages SF15-SF26, XP093336576, US ISSN: 2324-8858, DOI: 10.1190/INT-2018-0232.1 * abstract * * figures 1-13 * * page SF15 - page SF22 * * page SF24 * ----- | 1-15 | INV. G01V1/36 G01V1/30 G01V1/32 |
| X | Picetti F ET AL: "A Tool for Processing Seismic Images: Study on CycleGAN", , 2 November 2020 (2020-11-02), XP093336578, Retrieved from the Internet: URL:https://www.earthdoc.org/docserver/fulltext/2214-4609/2020/3rd-apac-nsge/1.1,_Francesco_Picetti,_Politecnico_di_Milano-85-187-Picetti-Francesco.pdf?expires=1763375079&id=id&accname=fromqa185&checksum=FBD7DBABA9D5DC74982548258A2EC4B7 [retrieved on 2025-11-14] * abstract * * figures 1,2 * * pages 2-5 * ----- -/-- | 1-15 | TECHNICAL FIELDS SEARCHED (IPC) G01V |

The present search report has been drawn up for all claims

| Place of search | Date of completion of the search | Examiner |
|---|---|---|
| The Hague | 18 November 2025 | Meyer, Matthias |

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 19 3506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOIERO D ET AL: "Water Layer Removal by Multidimensional Deconvolution of a Dense 3D Ocean-Bottom Seismic Field Dataset", 83RD EAGE CONFERENCE AND EXHIBITION 2022: WORKSHOPS : MADRID, SPAIN, 6-9 JUNE 2022, EUROPEAN ASSOCIATION OF GEOSCIENTISTS & ENGINEERS , 1 January 2022 (2022-01-01), pages 1323-1327, XP009562605, DOI: 10.3997/2214-4609.202210350 ISBN: 978-1-7138-5931-4 Retrieved from the Internet: URL:https://www.earthdoc.org/content/papers/10.3997/2214-4609.202210350 [retrieved on 2025-11-14] * abstract * * figures 1-4 * * pages 2-5 * | 1-15 | |

-----

TECHNICAL FIELDS
SEARCHED      (IPC)

The present search report has been drawn up for all claims

| Place of search | Date of completion of the search | Examiner |
|---|---|---|
| The Hague | 18 November 2025 | Meyer, Matthias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................................

& : member of the same patent family, corresponding
    document

EPO FORM 1503 03.82 (P04C01)

**REFERENCES CITED IN THE DESCRIPTION**

**Patent documents cited in the description**

- US 63678096